# EUROPEAN PATENT SPECIFICATION

(11) **EP 2 214 489 B1**
(45) Date of publication and mention of the grant of the patent: **16.03.2016**
(21) Application number: 08848078.5
(22) Date of filing: 05.11.2008
(51) Int. Cl.: A01N 47/44, A01N 25/24, A01N 25/34, A01P 1/00, B05D 5/00, C09D 5/14

(54) **ANTIMICROBIOLOGICAL COATING, COATING SOLUTION AND METHOD FOR MANUFACTURING AND REFORMING THE COATING**
ANTIMIKROBIELLE BESCHICHTUNG, BESCHICHTUNGSLÖSUNG UND VERFAHREN ZUR HERSTELLUNG UND REFORMIERUNG DER BESCHICHTUNG
REVÊTEMENT ANTIMICROBIOLOGIQUE, SOLUTION DE REVÊTEMENT ET PROCÉDÉ DE FABRICATION ET DE REFORMAGE DU REVÊTEMENT

(30) Priority: 05.11.2007 FI 20075785
(43) Date of publication of application: 11.08.2010
(73) Proprietor: Millidyne OY, 33720 Tampere (FI)
(72) Inventor: SORSA, Petri, FI-33340 Tampere (FI); KNUUTILA, Jari, FI-33560 Tampere (FI); KOLARI, Mika, FI-33710 Tampere (FI)
(74) Representative: Tampereen Patenttitoimisto Oy
(86) International application number: PCT/FI2008/050634
(87) International publication number: WO 2009/060123

(56) References cited:
- EP-A2- 1 110 948
- JP-A- 10 001 402
- JP-A- 2004 175 822
- US-A- 6 031 119
- US-A1- 2001 003 733
- US-A1- 2006 137 566

## Description

### Field of the invention

The invention relates to an antimicrobiological coating prepared by the sol-gel method. The invention also relates to a coating solution to be applied onto the surface of a substrate to form an antimicrobiological sol-gel coating. Furthermore, the invention relates to a method for forming an antimicrobiological sol-gel coating onto a substrate, as well as a method for regenerating the antimicrobiological activity of a coating on a substrate.

### Background of the invention

The ease of cleaning various surfaces and the coating of surfaces to provide an antimicrobiological effect are of particular importance, for example, in hospitals, in food industry and in mass catering services, as well as in various public facilities. Conventionally, easily cleanable surfaces have been provided by means of coatings with a low surface energy, for example by means of various fluorine compounds (such as PFTE, *i.e*. Teflon), waxes, and silicones. These components that enhance cleanliness have been added into various paints for a long time. Various active components, for example biocides, such as silver or titanium oxide, have also been added into paints to provide a property to repel bacteria and other microbes.

However, the suitability of paint-type coatings for coating various types of materials is limited. Typically, paints are opaque in nature and they change the appearance and character of the surface to be coated. In many cases, a thick, film-like paint also sets constraints and demands on the quantity and quality of additives, such as biocides, to be used. The required cleanliness or the effect of the antimicrobiological agent will often remain insufficient as the paint film conceals the active ingredients in it. For an effective paint-based coating, a large quantity of additives is normally required.

To destroy microbes from surfaces, it is also possible to use various disinfectants that contain biocides. The action of conventional disinfectants is one-off, and in spite of their effectiveness, their action is of short duration.

Contamination of the surface to a lesser degree and, on the other hand, the easier cleanability of the contaminated surface together with the antimicrobial effect are desired properties of a coating in many uses. Furthermore, the coating to be applied should be wear-proof and provide protection from microbiological contamination for as long a time as possible, but without altering the properties of the surface to be coated.

Document US 2006/137566 A1 discloses an antifouling paint composition which is useful for preventing the fouling of sea equipments. The paint composition comprises a resin, a solvent, polyhexamethylene guanide salt, a pigment, cuprous oxide and/or zinc pyrithione.

### Brief summary of the invention

It is an aim of the present invention to provide a type of antimicrobiological coating that is suitable for several surface materials and is prepared by the sol-gel method, and is unnoticeable, durable, maintains the original character of the surface and enhances the cleanliness of the surface, and also enables an effective long-term antimicrobiological effect on the surface to be treated.

To achieve this aim, the antimicrobiological coating of the invention, made by the sol-gel method, is primarily characterized in that the coating comprises
- a binding agent that forms a coating layer oriented with respect to the substrate, and
- as an antimicrobiological component, a polyhexamethylene guanidine salt or a mixture of such salts, bound to the surface of the substrate by means of the above-mentioned binding agent.

The coating solution according to the invention, to be applied onto a substrate to form an antimicrobiological sol-gel coating, is, in turn, primarily characterized in that the coating solution comprises at least a solvent, a binding agent and, as an antimicrobiological component, a polyhexamethylene guanidine salt or a mixture of such salts.

The method according to the invention for forming an antimicrobiological sol-gel coating on a substrate is, in turn, primarily characterized in that the above-described coating solution is applied onto the substrate, wherein the binding agent in the coating solution forms a coating layer oriented with respect to the substrate and binds the polyhexamethylene guanidine salt that acts as an antimicrobiological component, to the surface of the substrate.

The functionality of the coating according to the invention is based on the interaction of the suitable sol-gel coating and the applied active antimicrobiological component or biocide, resulting in a significant improvement in the duration of action of the biocide on the substrate coated with said coating, and good antimicrobiological effect even with a very small quantity of added biocide.

The binder used in the coating is fluorosilane.

The biocide or antimicrobiological component used in the coating is a polyhexamethylene guanidine salt or a mixture of such salts, whose antimicrobial effect is based on an electrical charge. In particular, poly(hexamethylenediamine guanidium chloride) (PHMG) is used. By means of the binding agent, the water-soluble PHMG can be maintained on the surface of the substrate without a thick film-like coating and in such a way that the antimicrobiological effect of the PHMG is maintained in the coating even with small quantities of PHMG. In other words, the thin sol-gel coating according to the invention anchors the biocide in itself without blocking out the effect of the biocide. In this way, even a small quantity of biocide provides an effective and long-term antimicrobiological property on the surface of a substrate treated with the coating according to the invention. The coating according to the invention has an antimicrobiological effect under both moist and dry conditions.

The coating solution according to the invention can be easily applied onto the substrate to be coated. The binding agent of the coating adheres chemically to the substrate material, if the chemistry of the substrate is suitable or the substrate has been treated to have suitable chemistry. Covalent metal-oxygen bonds are formed between the coating and the substrate material. Particularly the oriented structure of the binding agent with respect to the substrate will also make the binding agent form a hydrophobic and oleophobic surface onto the coating, resulting in a coating that is resistant to contamination and easily cleanable.

Fluorosilane forms a thin and non-film-like coating on the surface of the substrate to be coated. Consequently, fluorosilane does not block out the effect of the biocide used, but the biocide is on the surface of the coating, wherein even small quantities of biocide in the coating will provide a good antimicrobial effect. Furthermore, the coating can be provided with a hydrophobic surface that prevents the dissolution of very water-soluble PHMG from the coating.

The coating according to the invention adheres very well to stainless steel and other metal surfaces as well as glass and various ceramic surfaces. Painted surfaces and plastic materials can also be coated with a coating according to the invention. The surfaces can be pre-treated before coating to improve the adhesion of the coating. One advantage of the sol-gel coating is the ease of modifying the coating to be suitable for the use.

The coating according to the invention can be easily renewed, for example, in connection with cleaning. Consequently, the invention also relates to a method for regenerating the antimicrobiological activity of a coating already applied onto the surface of a substrate, in which method a porous or worn-out coating on the substrate is renewed or the porous parts are refilled with the above-described coating solution that contains a polyhexamethylene guanidine salt or a mixture of such salts as an antimicrobiologically active component.

In addition to the ease of cleaning and the soil-repellent surface, the surface according to the invention has the advantages of good chemical and mechanical strength. Other advantages include unnoticeability and invisibility compared with paint coatings. The coating is also easy to prepare on site and to apply onto the surfaces to be treated. The coating has a short drying time at room temperature; in other words, it does not require separate thermal treatment. Furthermore, the long duration of the antimicrobiological effect of the coating according to the invention will reduce the need for cleaning chemicals.

The coating according to the invention can be applied widely in various uses, and the coating can also be easily adopted to new applications. Particularly hospitals, food industry and catering services are advantageous uses for the coating according to the invention, but the coating can also be widely used, for example, in process industry and packaging industry. Moreover, suitable uses include various public facilities, schools, day-care centres, offices and spas, in which the ease of cleaning and the antimicrobial property of surfaces are desired. Furthermore, the coating according to the invention can also be used, for example, in ventilation systems to prevent microbiological contamination.

On the basis of experiments carried out, the coating according to the invention is effective and easy to use for the treatment of even large surfaces. The coating resists various conditions well (chemical conditions, temperatures), which makes is suitable for many even demanding uses. Consequently, the coating is also resistant to various cleaning chemicals and washing conditions.

By means of the coating according to the invention, it is possible to reduce significantly, for example, the quantity of the meticillin-resistent bacteria *Staphylococcus aureus* (MRSA) and *Pseudomonas aeruginosa* on the surface of stainless steel in a hospital environment. The difference between coated and uncoated steel is significant under both dry and moist conditions.

### Detailed description of the invention

In this context, "sol-gel coating" refers to a coating formed of a suspension of colloid particles or macromolecules.

An antimicrobiological coating made by the sol-gel method onto the surface of a substrate comprises a binding agent that forms a coating layer on the substrate, oriented with respect to the substrate, and a polyhexamethylene guanidine salt or a mixture of such salts as an antimicrobiological component that is bound to the surface of the substrate by means of the binding agent. The binding agent to be used in the coating is fluorosilane, which forms a hydrophobic surface onto the surface of the substrate, wherein a soil-repellent coating that is also easy to clean can be formed.

To the above-mentioned binding agents, it is also possible to add an organic molecule, depending on the use and function of the coating. Examples to be mentioned of such organic components include acrylates, epoxies, vinyl esters, and urethanes.

As the antimicrobiological component, a polyhexamethylene guanidine salt or a mixture of such salts is used. In particular, the antimicrobiological component used is poly(hexamethylenediamine guanidium chloride) (PHMG), whose CAS number is 57028-96-3. PHMG is also called polyhexamethylene guanidine.

As examples of other polyhexamethylene guanidine salts, polyhexamethylene guanidine phosphate and polyhexamethylene guanidine hydrochloride can be mentioned.

The content of the antimicrobiological component in the coating may vary, depending on the use and the desired antimicrobiological effect. Because the antimicrobiological agent can be bound to the surface of the coating, even small doses of the antimicrobiological agent provide an effective long-term antimicrobiological effect. Furthermore, PHMG is an effective antimicrobiological agent, so that also for that reason even small doses will provide an effective long-term antimicrobiological effect against, for example, gram-negative and gram-positive bacteria, fungi, germs, viruses, moulds, and yeasts. The effectiveness of PHMG is based on its positive electrical charge that reacts with the negative charge of the cell membrane of microbes, destroying the cell membrane. The mechanism of action of PHMG is physical and not chemical, for which reason it is an effective biocide against microbes.

In the coating, the content of polyhexamethylene guanidine salt or a mixture of such salts varies from 0.1 to 40 wt-% of the binding agent content; preferably, the content of polyhexamethylene guanidine salt is 1 to 15 wt-% of the binding agent content. In the coating, the water-soluble antimicrobiological component is bound to a matrix formed by the binding agent in such a way that the antimicrobiological component is on the surface of the coating.

Thanks to the high molecular weight of PHMG, the molecule comprises several active points which react with the cell membrane of microbes. The molecular weight varies from 8,000 to 10,000. However, PHMG is a safe antimicrobiological agent with a low toxicity, so that it can be used in a variety of applications. PHMG has an antimicrobial action in both dry and moist conditions.

The coating solution to be applied onto the substrate to form the antimicrobiological sol-gel coating also contains various catalysts and auxiliary agents as well as a solvent. Water, alcohol, other organic solvents, or mixtures of them are used as the solvent. By the content and quality of the solvent, it is possible to influence, among other things, the thickness and orientation of the film to be formed. When the coating is applied onto the substrate, the solvent evaporates off, resulting in the formation of a thin coating film. The thickness of the finished sol-gel coating is less than 20 µm; preferably, the thickness of the film is less than 1 µm.

In addition to polyhexamethylene guanidine salts, it is also possible to use, if necessary, inorganic antimicrobiological agents, such as silver or titanium oxide or other corresponding biocides, in the coating.

In the method for forming an antimicrobiological sol-gel coating on the surface of a substrate, the above-described coating solution is applied on the substrate, and the binding agent in the coating solution is bound to the surface, forming a thin oriented surface layer and binding the antimicrobiological component to the surface of the substrate. The formed coating is a thin molecular film on the surface of the substrate to be treated, wherein the antimicrobiological component is on the surface of the coating and is thereby active and efficient against microbes. With the coating, it is possible to reduce significantly the quantity of bacteria and other microbes on the surface treated with the coating. The solvent in the coating solution evaporates when the coating becomes dry.

The formed coating is thin and colourless, and it does not alter the visual properties of the surface to be treated. The coating adheres chemically to the substrate, if the chemistry of the substrate is suitable or the substrate has been treated to have suitable chemistry. Covalent metal-oxygen bonds are formed between the coating and the substrate material, resulting in the formation of the oriented structure of the coating. The surface of the coating is hydrophobic outwards, which is also a result of the orientation of the binder on the surface of the substrate. Furthermore, the surface of the coating is oleophobic.

The coating is particularly suitable for substrates to which the coating can adhere by covalent metal-oxygen bonds. Suitable substrates are preferably metal surfaces, particularly stainless steel surfaces as well as ceramic surfaces and glass surfaces. Surfaces that do not enable the direct adherence of the coating must be pre-treated to be chemically suitable before applying the coating. For example, plastic and paint surfaces may require pre-treatment of the surface. The coating is also suitable for use on porous surfaces in which the coating is partly absorbed into the substrate to be coated but it still forms a durable and uniform coating film on the surface of the substrate.

Pre-treatment of the surfaces refers to treating the surface of the substrate before it is coated, to achieve the desired processing and the properties of the coating. The pre-treatment of the surface may include reducing the amount of contaminants to an acceptable level or, in other words, cleaning, modifying the physical and chemical properties of the surface, and activating the surface to enhance the reactions. To achieve a smooth and defect-free sol-gel coating, the surface to be coated must be clean. Therefore, before applying the coating, the surfaces to be protected should be cleaned from all contaminants. The applied pre-treatments do not affect the properties of the coating, but they are significant in view of the coatability, adhesion and durability of the surface.

The coating can be applied onto the substrate easily by sweeping, brushing, spraying, rubbing, dipping, or in another way, to provide a thin coating layer on the surface to be treated. By the composition of the coating solution, it is possible to modify the spreading properties of the coating and the thickness of the coating film to be formed. The coating is dried and cured at room temperature without separate thermal treatment, so that it is also easy and quick to prepare on site. The drying time of the coating varies from a few minutes to a few hours, depending on the surface to be treated. On the surface of a hard and smooth substrate, the coating is dried faster than on the surface of a porous substrate.

The coating is preferably formed by applying a coating solution that contains at least a solvent, a binding agent, and a polyhexamethylene guanidine salt or a mixture of such salts, onto the substrate. The coating solution may also comprise two components which are mixed first on site just before coating the substrate. Alternatively, the antimicrobiological feature of the coating may be prepared first on the surface to be coated, wherein a coating is first formed on the surface of the substrate, and the antimicrobiological component is then rubbed into the coating.

The durability and service life of the coating will depend on the use and the conditions. However, the coating enables a long-term effect against microorganisms, which may last from weeks to several months. In some cases, this feature may last even for years, depending on the quality and wear of the surface. The molecular structure of the coating will resist even high temperatures without impairing the effect of the coating. The coating also resists various chemical conditions well; for example use in a wide pH range is possible, because PHMG is stable in the pH range from 1 to 10. The coating also resists various chemicals well. Consequently, the washability of the coating is good.

Particularly, the coating formed on the substrate is also water and fat repellent, wherein the surface also remains cleaner and the surface can be cleaned more easily, which reduces significantly the need for cleaning chemicals and also contributes to the durability of the coating. Thanks to the hydrophobic surface, water-soluble PHMG can also be kept in the coating.

Furthermore, the coating can be easily renewed. The coating can be applied again on a surface that has already been treated before, without a need to remove the old coating. The new coating layer will adhere to the points where it has been rubbed off or become porous as a result of mechanical or chemical wear. The coating can be easily renewed, for example, in connection with normal cleaning. At the same time, the antimicrobiological activity of the coating can be renewed by refilling the porous or worn-out parts of the coating with a coating composition which comprises at least a polyhexamethylene guanidine salt as an antimicrobiologically active component. The previous coating on the surface of the substrate does not need to be a sol-gel coating according to the invention, but the coating may be any coating made by the sol-gel method and to be renewed, or whose antimicrobiological effect is to be enhanced by including a polyhexamethylene guanidine salt, particularly PHMG, in the coating layer.

The coating according to the invention can be applied widely in various uses, and the coating can be easily transferred to new uses. The possibilities of using the coating are also increased by the fact that the agent used as the antimicrobiological agent is active in both dry and moist conditions. The coating can also be easily applied on surfaces that comprise complex shapes.

Particularly hospitals and food industry are advantageous uses for the coating according to the invention. In hospitals, the coating can be widely used on all surfaces that require antimicrobiological protection, including walls, doors, floors, as well as various pieces of furniture and equipment. In food industry, the use of the coating improves, for example, the shelf life of food, because the food is not exposed to microbes during the preparing and handling processes and thereby also the content of preservatives in the food itself can be reduced. In process industry, the coating can be used for coating either the production facilities or the production machinery.

The coating can be generally applied on any ceramic surfaces, for example in bathrooms and other sanitary facilities. It is also possible to coat wooden surfaces with said coating; in other words, the coating can be used as a wood preservative.

The coating can also be widely used in processing industry, for example in paper industry or packaging industry, to prevent microbiological contaminations. The coating can also be used for coating packages made of plastic or cardboard. Furthermore, the coating can be widely used in catering services, schools, day-care centres, public facilities, offices, and spas. On the basis of tests carried out, the coating is efficient and easy to use for the treatment of even large surfaces. The coating according to the invention can also be used in ventilation systems to prevent microbiological contamination. Various applications relating to the treatment of water are also possible uses.

In the following example, the performance of a coating, which is not within the present invention on a steel surface and its effect on the number of bacteria found on coated surfaces particularly in a hospital environment were examined. An uncoated stainless steel surface was used as a reference.

The bacterial strains used in the test was the meticillin-resistent *Staphylococcus aureus* strain ATCC 33591 and *Pseudomonas aeruginosa* strain ATCC 15442 (under moist conditions only).

The coating solution used in the tests included 0.016 wt-% of PHMG as the antimicrobiological component, about 0.3 wt-% of silanes as the binding agent, about 5 wt-% of water, and about 1.7 wt-% of an acid catalyst. The rest of the solution was a mixture of isopropanol and ethanol in a mixture ratio of 1:1.

The stainless steel surfaces were treated with the above-described coating solution and dried. The tests were carried out on both dry surface and moist surface. As a reference, an uncoated stainless steel surface was used.

The test was carried out by applying the EN13697 surface disinfectant standard. In a viability assay, 100 µl of a microbial solution (1 x 10⁵ pmy/ml) was pipetted onto the surface, dried at 37°C for 2 h and sampled on a dish right away (before drying), 4 h, 24 h, and 48 h after the pipetting. Part of the steel surfaces were stored in dry conditions (at room temperature) and part in moist conditions (+37°C) for the time of the series of tests. Two parallel samples were taken of the tests. The samples were incubated at 37°C for 1 day.

In the test, it was found that the coating according to the invention reduces significantly the content of both MRSA and *Pseudomonas aeruginosa* bacteria on the surface of stainless steel. The difference between coated and uncoated steel is significant under both dry and moist conditions. The results of the test are shown in tables 1 and 2.

**Table 1. Number of MRSA colonies on dishes (cfu/ml).**

| time (h) | uncoated steel, dry | coated steel, dry | uncoated steel, moist | coated steel, moist |
|---|---|---|---|---|
| 0 | 336 | 336 | 336 | 336 |
| 4 | 328 | 0 | 76000 | 0 |
| 24 | 342 | 9 | 737500 | 0 |
| 48 | 610 | 1 | 830000 | 1 |

**Table 2. Number of Pseudomonas aeruginosa colonies on dishes (cfu/ml),**

| time (h) | uncoated steel, moist | coated steel, moist |
|---|---|---|
| 0 | 435 | 435 |
| 4 | 113000 | 0 |
| 24 | 1000000 | 0 |
| 48 | 6200000 | 0 |

## Claims

1. An antimicrobiological coating prepared onto the surface of a substrate by the sol-gel method, **characterized in that** the coating comprises
- as a binding agent, a fluorosilane, that forms a coating layer oriented with respect to the substrate, and
- as an antimicrobiological component, a polyhexamethylene guanidine salt or a mixture of such salts, bound to the surface of the substrate by means of the above-mentioned binding agent.

2. The coating according to claim 1, **characterized in that** another organic binding agent has been added into the binding agent.

3. The coating according claim 1 or 2, **characterized in that** the coating comprises an inorganic antimicrobiological agent or some other biocide.

4. The coating according to any of the preceding claims, **characterized in that** the content of polyhexamethylene guanidine salt is 0.1 to 40 wt-% of the binding agent content.

5. The coating according to any of the preceding claims, **characterized in that** the content of polyhexamethylene guanidine salt is 1 to 15 wt-% of the binding agent content.

6. The coating according to any of the preceding claims, **characterized in that** the substrate is metal, glass, or ceramic material.

7. The coating according to any of the preceding claims, **characterized in that** the thickness of the coating is less than 20 µm.

8. The coating according to any of the preceding claims, **characterized in that** the thickness of the coating is less than 1 µm.

9. A coating solution to be applied onto the substrate to form an antimicrobiological sol-gel coating, **characterized in that** the coating solution comprises at least a solvent, a fluorosilane as a binding agent and, as an antimicrobiological component, a polyhexamethylene guanidine salt or a mixture of such salts.

10. The coating solution according to claim 9, **characterized in that** the content of polyhexamethylene guanidine salt is 0.1 to 40 wt-% of the binding agent content.

11. The coating solution according to claim 9, **characterized in that** the content of polyhexamethylene guanidine salt is 1 to 15 wt-% of the binding agent content.

12. The coating solution according to any of the preceding claims 9 to 11, **characterized in that** another organic binding agent has been added into the binding agent.

13. A method for forming an antimicrobiological sol-gel coating onto the surface of a substrate, **characterized in that** in the method, a coating solution according to any of the claims 9 to 12 is applied onto the substrate, the binding agent of the coating solution forming a coating layer oriented with respect to the substrate and binding the polyhexamethylene guanidine salt or a mixture of such salts, acting as the antimicrobiological component, to the surface of the substrate.

14. The method according to claim 13, **characterized in that** the surface of the substrate is pre-treated before the application of the coating solution.

15. A method for regenerating the antimicrobiological activity of a coating prepared by the sol-gel method on the surface of a substrate, in which method the porous or worn-out coating on the substrate is renewed or the porous points are filled with the coating solution according to any of the claims 9 to 12.

## Patentansprüche

1. Antimikrobiologische Beschichtung, die mittels Sol-Gel-Verfahren auf der Oberfläche eines Substrats hergestellt wird, **dadurch gekennzeichnet, dass** die Beschichtung Folgendes umfasst:
- ein Fluorsilan als Bindemittel, das eine Beschichtungsschicht bildet, die in Bezug auf das Substrat ausgerichtet ist, und
- ein Polyhexamethylenguanidinsalz oder eine Mischung solcher Salze als antimikrobiologische Komponente, die mittels des obengenannten Bindemittels auf der Oberfläche des Substrats gebunden ist.

2. Beschichtung nach Anspruch 1, **dadurch gekennzeichnet, dass** ein weiteres organisches Bindemittel zu dem Bindemittel gegeben wurde.

3. Beschichtung nach Anspruch 1 oder 2, **dadurch gekennzeichnet, dass** die Beschichtung ein anorganisches antimikrobiologisches Mittel oder ein anderes Biozid umfasst.

4. Beschichtung nach jeglichem der vorhergehenden Ansprüche, **dadurch gekennzeichnet, dass** der Gehalt an Polyhexamethylenguanidinsalz 0,1 bis 40 Gew.-% des Bindemittelgehalts beträgt.

5. Beschichtung nach jeglichem der vorhergehenden Ansprüche, **dadurch gekennzeichnet, dass** der Gehalt an Polyhexamethylenguanidinsalz 1 bis 15 Gew.-% des Bindemittelgehalts beträgt.

6. Beschichtung nach jeglichem der vorhergehenden Ansprüche, **dadurch gekennzeichnet, dass** das Substrat aus Metall, Glas oder einem keramischen Material besteht.

7. Beschichtung nach jeglichem der vorhergehenden Ansprüche, **dadurch gekennzeichnet, dass** die Dicke der Beschichtung weniger als 20 µm beträgt.

8. Beschichtung nach jeglichem der vorhergehenden Ansprüche, **dadurch gekennzeichnet, dass** die Dicke der Beschichtung weniger als 1 µm beträgt.

9. Beschichtungslösung zum Auftragen auf das Substrat, um eine antimikrobiologische Sol-Gel-Beschichtung zu bilden, **dadurch gekennzeichnet, dass** die Beschichtungslösung mindestens ein Lösungsmittel, ein Fluorsilan als Bindemittel und ein Polyhexamethylenguanidinsalz oder eine Mischung solcher Salze als antimikrobbiologische Komponente umfasst.

10. Beschichtungslösung nach Anspruch 9, **dadurch gekennzeichnet, dass** der Gehalt an Polyhexamethylenguanidinsalz 0,1 bis 40 Gew.-% des Bindemittelgehalts beträgt.

11. Beschichtungslösung nach Anspruch 9, **dadurch gekennzeichnet, dass** der Gehalt an Polyhexamethylenguanidinsalz 1 bis 15 Gew.-% des Bindemittelgehalts beträgt.

12. Beschichtungslösung nach jeglichem der vorhergehenden Ansprüche 9 bis 11, **dadurch gekennzeichnet, dass** ein weiteres organisches Bindemittel zu dem Bindemittel gegeben wurde.

13. Verfahren zur Bildung einer antimikrobiologischen Sol-Gel-Beschichtung auf der Oberfläche eines Substrats, **dadurch gekennzeichnet, dass** in dem Verfahren eine Beschichtungslösung nach jeglichem der Ansprüche 9 bis 12 auf dem Substrat aufgebracht wird, wobei das Bindemittel der Beschichtungslösung eine in Bezug auf das Substrat ausgerichtete Beschichtungsschicht bildet und das Polyhexamethylenguanidinsalz oder eine Mischung solcher Salze, das/die als antimikrobiologische Komponente wirkt, auf der Oberfläche des Substrats bindet.

14. Verfahren nach Anspruch 13, **dadurch gekennzeichnet, dass** die Oberfläche des Substrats vor dem Aufbringen der Beschichtungslösung vorbehandelt wird.

15. Verfahren zum Regenerieren der antimikrobiologischen Aktivität einer Beschichtung, die mittels Sol-Gel-Verfahren auf der Oberfläche eines Substrats hergestellt wurde, wobei die poröse oder abgenutzte Beschichtung auf dem Substrat in dem Verfahren erneuert wird oder die porösen Punkte mit der Beschichtungslösung nach jeglichem der Ansprüche 9 bis 12 gefüllt werden.

## Revendications

1. Revêtement antimicrobiologique préparé sur la surface d'un substrat via le procédé sol-gel, **caractérisé en ce que** le revêtement comprend :
- à titre d'agent de liaison, un fluorosilane qui forme une couche de revêtement orientée par rapport au substrat ; et
- à titre d'un composant antimicrobiologique, un sel de polyhexaméthylène guanidine ou un mélange desdits sels, lié à la surface du substrat au moyen de l'agent de liaison mentionné ci-dessus.

2. Revêtement selon la revendication 1, **caractérisé en ce qu'**un autre agent de liaison organique a été ajouté à l'agent de liaison.

3. Revêtement selon la revendication 1 ou 2, **caractérisé en ce que** le revêtement comprend un agent antimicrobiologique inorganique ou un quelconque autre biocide.

4. Revêtement selon l'une quelconque des revendications précédentes, **caractérisé en ce que** la teneur du sel de polyhexaméthylène guanidine représente de 0,1 à 40 % en poids de la teneur de l'agent de liaison.

5. Revêtement selon l'une quelconque des revendications précédentes, **caractérisé en ce que** la teneur du sel de polyhexaméthylène guanidine représente de 1 à 15 % en poids de la teneur de l'agent de liaison.

6. Revêtement selon l'une quelconque des revendications précédentes, **caractérisé en ce que** le substrat est un métal, du verre ou une matière céramique.

7. Revêtement selon l'une quelconque des revendications précédentes, **caractérisé en ce que** l'épaisseur du revêtement est inférieure à 20 µm.

8. Revêtement selon l'une quelconque des revendications précédentes, **caractérisé en ce que** l'épaisseur du revêtement est inférieure à 1 µm.

9. Solution d'enduction à appliquer sur un substrat pour former un revêtement sol-gel antimicrobiologique, **caractérisée en ce que** la solution d'enduction comprend au moins un solvant, un fluorosilane à titre d'agent de liaison et, à titre d'un composant antimicrobiologique, un sel de polyhexaméthylène guanidine ou un mélange desdits sels.

10. Solution d'enduction selon la revendication 9, **caractérisée en ce que** la teneur du sel de polyhexaméthylène guanidine représente de 0,1 à 40 % en poids de la teneur de l'agent de liaison.

11. Solution d'enduction selon la revendication 9, **caractérisée en ce que** la teneur du sel de polyhexaméthylène guanidine représente de 1 à 15 % en poids de la teneur de l'agent de liaison.

12. Solution d'enduction selon l'une quelconque des revendications précédentes 9 à 11, **caractérisée en ce qu'**un autre agent de liaison organique a été ajouté à l'agent de liaison.

13. Procédé pour la formation d'un revêtement sol-gel antimicrobiologique sur la surface d'un substrat, **caractérisé en ce que**, dans le procédé, on applique sur le substrat une solution d'enduction selon l'une quelconque des revendications 9 à 12, l'agent de liaison de la solution d'enduction formant une couche de revêtement orientée par rapport au substrat et liant le sel de polyhexaméthylène guanidine ou un mélange desdits sels, en faisant office de composant antimicrobiologique, à la surface du substrat.

14. Procédé selon la revendication 13, **caractérisé en ce que** la surface du substrat est soumise à un prétraitement avant l'application de la solution d'enduction.

15. Procédé pour régénérer l'activité antimicrobiologique d'un revêtement préparé via le procédé sol-gel sur la surface d'un substrat, procédé dans lequel on renouvelle le revêtement poreux ou usé sur le substrat ou on remplit les endroits poreux avec la solution d'enduction selon l'une quelconque des revendications 9 à 12.
